# DEMANDE DE BREVET EUROPEEN

(11) **EP 2 770 263 A2**
(43) Date de publication de la demande: **27.08.2014**
(21) Numéro de dépôt: 14154199.5
(22) Date de dépôt: 06.02.2014
(51) Int. Cl.: F24D 3/08, F24D 12/02, F24D 19/10

(54) **Procédé et installation de chauffage d'eau**

(30) Priorité: 25.02.2013 FR 1351651
(71) Demandeur: A. Theobald S.A., 77200 Torcy (FR)
(72) Inventeur: Pechoux, Christophe, 77450 Condé sainte Libiaire (FR); Fondanesches, Stéphane, 77950 Maincy (FR)
(74) Mandataire: Novagraaf Technologies

(57) **Abrégé**

L'invention concerne un procédé de chauffage d'eau, utilisant un poêle bouilleur (2) à chargement manuel en bois, un régulateur (11) et une chaudière (3) à alimentation automatique en combustible, le poêle bouilleur (2) présentant un moyen de commande (13) et un circuit d'eau (5), la chaudière (3) présentant un brûleur (6) et un circuit d'eau (8), comprenant les étapes consistant à : prendre en compte une température de consigne du circuit d'eau (8) en sortie de la chaudière (3), dite température de consigne, et mesurer une température effective de l'eau du circuit d'eau (8) en sortie de la chaudière (3), dite température chaudière, détecter si le poêle bouilleur (2) est allumé, si le poêle bouilleur (2) est allumé, envoyer l'information de l'allumage du poêle bouilleur (2) par le moyen de commande (13) au régulateur (11), éteindre ou diminuer, par le régulateur (11), la puissance du brûleur (6), en fonction de la valeur de l'écart entre la température de consigne et la température effective. Le procédé de chauffage comprend aussi les étapes consistant à, lorsque le poêle bouilleur (2) est allumé : mesurer une température de l'eau de sortie du poêle bouilleur (2) dite température poêle bouilleur, calculer le besoin en bois du poêle bouilleur (2) en fonction de la température chaudière, de la température du poêle bouilleur et de la température de consigne, signaler le besoin en bois par un moyen de signalisation (15).

## Description

La présente invention concerne le domaine des installations de chauffage utilisant un poêle bouilleur à chargement manuel en bois.

Il est connu du document FR 2 924 204 un dispositif de gestion d'une installation de chauffage et de production d'eau chaude sanitaire, utilisant plusieurs générateurs de chaleur.

Les générateurs de chaleur peuvent être, par exemple, une chaudière au gaz, une chaudière à bois et un chauffe-eau électrique.

Un module hydraulique sous la forme d'un ballon de stockage collecte l'eau chaude chauffée par les différents générateurs de chaleur, et distribue l'eau chauffée dans les circuits de chauffage en fonction de la demande et de la température.

Une unité centrale de collecte de données, connectée, par exemple, à une sonde de température extérieure, comprend un calculateur qui permet de commander l'alimentation du module hydraulique par un générateur de chaleur ou par une combinaison de générateurs de chaleur sélectionnés.

Ce dispositif de gestion est adapté à une chaudière à bois automatique utilisant des pellets, mais n'est pas adapté à un poêle bouilleur à chargement manuel du bois.

En outre, il ne favorise pas l'utilisation systématique de la chaudière à bois mais l'utilisation des différents générateurs de chaleur en fonction des coûts des différentes sources de chaleur.

Il est également connu du document FR 2 479 422 une chaudière de chauffage destinée à être placée dans une pièce d'habitation, comprenant deux sources de chaleur intégrées, de nature différente, chauffant le ou les mêmes fluides caloporteurs qui peuvent être de l'air et de l'eau, dont l'une est constituée par le foyer d'une cheminée pour feu de bois d'intérieur et l'autre utilise de l'électricité, du gaz et/ou du mazout.

Cette chaudière de chauffage ne permet pas d'utiliser toute l'énergie dégagée par la combustion du bois et doit présenter des moyens pour diminuer la combustion du bois lorsque celle-ci est trop importante, tels qu'une trappe, ce qui encrasse le chaudière de chauffage et la rend défectueuse à terme.

Dans ce contexte, la présente invention a pour but de proposer un procédé de chauffage permettant de favoriser l'utilisation d'un poêle bouilleur à chargement manuel et toute la combustion du bois du poêle bouilleur à chargement manuel.

Le procédé de chauffage d'eau est remarquable en ce qu'il utilise un poêle bouilleur à chargement manuel en bois, un régulateur et une chaudière à alimentation automatique en combustible, le poêle bouilleur présentant un moyen de commande et un circuit d'eau, la chaudière présentant un brûleur et un circuit d'eau, et en ce qu'il comprend les étapes consistant à :
- prendre en compte une température de consigne du circuit d'eau en sortie de la chaudière, dite température de consigne, et mesurer une température effective de l'eau du circuit d'eau en sortie de la chaudière, dite température chaudière,
- détecter si le poêle bouilleur est allumé,
- si le poêle bouilleur est allumé, envoyer l'information de l'allumage du poêle bouilleur par le moyen de commande au régulateur,
- éteindre ou diminuer, par le régulateur, la puissance du brûleur, en fonction de la valeur de l'écart entre la température de consigne et la température effective.

L'allumage du poêle bouilleur est détecté par exemple lorsque la température des fumées est supérieure à une température de référence.

Avantageusement, lorsque le poêle bouilleur est allumé, le procédé peut :
- mesurer une température de l'eau de sortie du poêle bouilleur dite température poêle bouilleur,
- calculer le besoin en bois du poêle bouilleur en fonction de la température chaudière, de la température du poêle bouilleur et de la température de consigne,
- signaler le besoin en bois par un moyen de signalisation.

Le procédé peut comporter l'étape consistant à :
- détecter si la température poêle bouilleur est supérieure ou égale à une température de seuil,
- si la température poêle bouilleur est supérieure ou égale à la température de seuil, envoyer l'information de l'allumage du poêle bouilleur par le moyen de commande au régulateur,
- éteindre ou diminuer, par le régulateur, la puissance du brûleur, en fonction de la valeur de l'écart entre la température de consigne et la température effective.

La température de seuil est calculée et déterminée pour éviter la condensation de la vapeur d'eau des fumées dans le poêle bouilleur.

Par exemple, la température de seuil est 60°.

La température de consigne est calculée en tenant compte de différents paramètres, tels que la température de l'air ambiant et/ou la température de l'air extérieur.

Le procédé peut comporter une étape supplémentaire consistant à :
- calculer à nouveau la température de consigne et mesurer la température chaudière, après une durée déterminée qui suit l'allumage du poêle à bois, et l'arrêt ou la diminution de la puissance du brûleur,
- calculer à nouveau le besoin en bois et mesurer la température poêle bouilleur,
- signaler le besoin en bois par le moyen de signalisation.

La présente invention concerne également une installation de chauffage d'eau, comprenant un poêle bouilleur à chargement manuel en bois, et une chaudière à alimentation automatique en combustible, le poêle bouilleur présentant une pompe et un circuit d'eau, la chaudière présentant un brûleur, une pompe et un circuit d'eau.

L'installation de chauffage est remarquable en ce qu'elle comporte :
- un dispositif permettant de transmettre une partie de la chaleur du circuit d'eau du poêle bouilleur au circuit d'eau de la chaudière,
- un régulateur,
- un moyen de détection de l'allumage du poêle bouilleur,
- un moyen de commande du poêle bouilleur relié au régulateur et au moyen de détection,
- le moyen de commande étant apte à communiquer avec le régulateur pour réaliser la régulation de la puissance du brûleur de la chaudière.

Le moyen de détection de l'allumage du poêle bouilleur peut être un capteur de la température des fumées du poêle bouilleur.

Le moyen de commande comporte un moyen de signalisation relié au régulateur.

Avantageusement, le régulateur est relié à un capteur de température de l'air ambiant et/ou un capteur de température de l'air extérieur.

Dans une réalisation, elle comprend un échangeur entre le circuit d'eau du poêle bouilleur et le circuit d'eau de la chaudière, et en ce que les circuits d'eau sont distincts.

Dans une autre réalisation, le circuit d'eau du poêle bouilleur et le circuit d'eau de la chaudière sont branchés en parallèle.

Avantageusement, le moyen de commande et le régulateur présentent des émetteurs et des récepteurs qui communiquent entre eux.

Avantageusement, la chaudière comporte plusieurs circuits d'eau, chaque circuit d'eau étant adapté à chauffer une zone de chauffage.

D'autres caractéristiques et avantages de l'invention ressortiront clairement de la description qui en est faite ci-après, à titre indicatif et nullement limitatif, en référence aux dessins annexés, dans lesquels :
- la figure 1 représente un schéma d'une installation de chauffage d'eau selon un premier mode de réalisation de l'invention;
- la figure 2 représente un schéma d'une installation de chauffage d'eau selon un deuxième mode de réalisation de l'invention ;
- la figure 3 représente le procédé selon l'invention ; et
- la figure 4 représente une variante de réalisation du procédé selon l'invention.

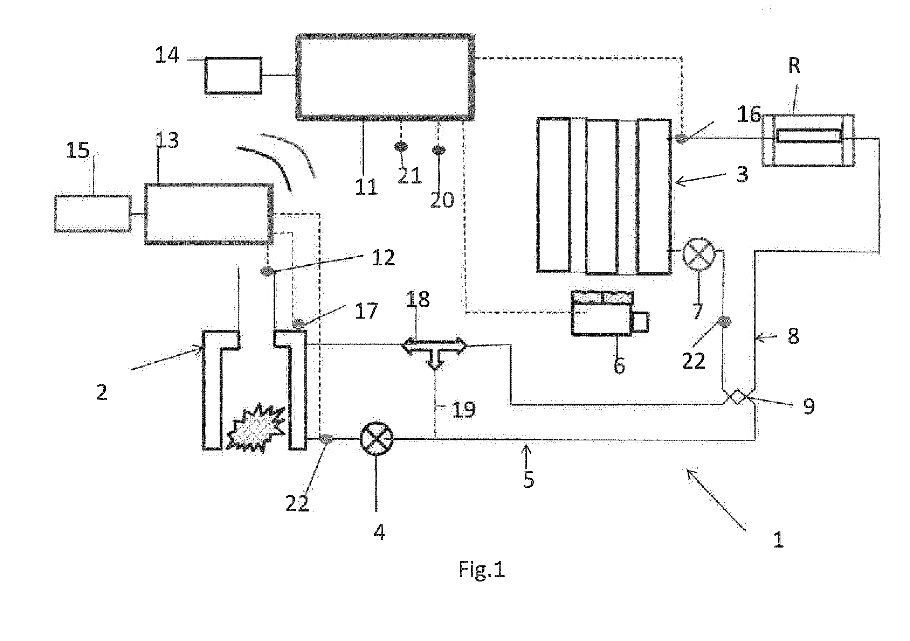

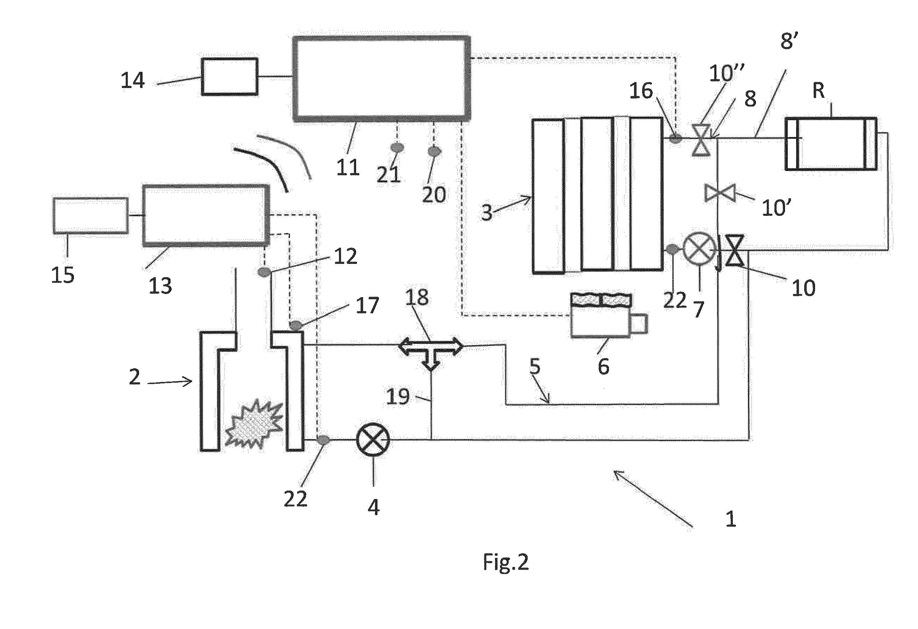

La présente invention, illustrée sur les figures 1 et 2, décrit une installation de chauffage 1 d'eau, comprenant un poêle bouilleur 2 à chargement automatique en bois et une chaudière 3 à alimentation automatique en combustible.

L'eau chauffée est de l'eau sanitaire et /ou de l'eau de chauffage. L'installation de chauffage d'eau peut ainsi délivrer de l'eau chaude sanitaire à un ballon d'eau chaude, non représenté, auquel elle est reliée, et/ou de l'eau de chauffage à des radiateurs R auxquels elle est reliée.

L'expression « poêle bouilleur » par la suite de la description représente les poêles à bois bouilleur à chargement manuel en bois combustible avec vitre ou les chaudières à bois à chargement manuel en bois combustible.

Le poêle bouilleur 2 comporte une pompe de circulation d'eau 4 et un circuit d'eau 5.

La chaudière 3 à alimentation automatique en combustible peut être une chaudière à gaz, une chaudière à fuel, une chaudière à pellets, une pompe à chaleur, par la suite dénommée chaudière 3.

La chaudière 3 présente un brûleur 6, une pompe de circulation d'eau 7, un circuit d'eau 8 et des moyens de commande du brûleur 6 non représentés.

Dans une réalisation non représentée, la chaudière 3 à alimentation automatique en combustible comporte plusieurs circuits d'eau, chaque circuit d'eau étant adapté à chauffer une zone de chauffage particulière de la maison ou du bâtiment à chauffer, ou à chauffer l'eau sanitaire.

Conformément à l'invention, un dispositif permet de transmettre une partie de la chaleur du circuit d'eau du poêle bouilleur 2 au circuit d'eau de la chaudière 3.

Sur la figure 1, il s'agit d'un échangeur 9 qui permet de transférer de la chaleur entre le circuit d'eau 5 du poêle bouilleur 2 et le circuit d'eau 8 de la chaudière 3, et les circuits d'eau 5 et 8 sont distincts.

Sur la figure 2, les circuits d'eau 5 et 8 sont branchés en parallèle et un ensemble de moyens de réglage et d'autorisation 10 de débit d'eau permettent de relier une partie du circuit d'eau 5 du poêle bouilleur 2 aux radiateurs R par exemple et de fermer une partie du circuit d'eau 8 de la chaudière 3, et inversement.

Par exemple, les moyens de réglage du débit 10 peuvent être des électrovannes et/ou des clapets anti-retour.

Dans les deux modes de réalisation, conformément à l'invention, l'installation de chauffage 1 d'eau comporte un régulateur 11 qui va détecter le fonctionnement du poêle bouilleur 2, pour diminuer ou en arrêter celui du brûleur 6 de la chaudière 3, la chaudière 3 restant en veille.

Puis, le régulateur 11 commande la reprise du fonctionnement du brûleur 6 de la chaudière 3 lorsque le poêle bouilleur 2 est détecté comme étant à l'arrêt.

Dans les modes de réalisation représentés, le régulateur 11 est extérieur à la chaudière 3.

En variante de réalisation, le régulateur 11 fait partie de la chaudière 3.

Comme représenté sur les figures 1 et 2, l'installation de chauffage 1 comporte un moyen de détection de l'allumage du poêle bouilleur 2.

Le moyen de détection de l'allumage du poêle bouilleur 2 est, par exemple, un capteur 12 de la température des fumées du poêle bouilleur 2 ou un capteur de la température de l'eau du poêle bouilleur 2.

L'avantage de la détection des fumées est la rapidité de la détection qui permet de connaître l'état du poêle bouilleur 2.

L'installation de chauffage 1 d'eau comporte un moyen de commande 13 du poêle bouilleur 2 relié au régulateur 11 et au moyen de détection, le moyen de commande 13 étant apte à communiquer avec le régulateur 11 pour réaliser la régulation et la diminution ou l'arrêt de la puissance du brûleur 6 de la chaudière 3 remplacée par la puissance du poêle bouilleur 2 en fonctionnement.

Le moyen de commande 13 et le régulateur 11 présentent des émetteurs et des récepteurs qui communiquent entre eux.

Par exemple, le moyen de commande 13 et le régulateur 11 comportent chacun une carte électronique à laquelle est relié un émetteur et un récepteur.

Ils communiquent par liaison filaire ou par ondes.

Par exemple, ils communiquent par ondes radio.

Le régulateur 11 et le moyen de commande 13 peuvent comporter un moyen de signalisation 14, 15.

Ces moyens de signalisation 14 et 15 peuvent être des moyens visuels et/ou sonores.

Le moyen de signalisation 15 du poêle bouilleur 2 peut comporter par exemple un écran d'affichage sur lequel est indiqué l'allumage ou pas du poêle bouilleur 2, et s'il faut remplir le poêle bouilleur 2 en combustible.

L'écran peut notamment indiquer comment remplir le poêle bouilleur 2.

Il peut comporter des LED qui indiquent à l'utilisateur, et s'il faut par exemple charger plus en bois combustible, beaucoup plus, maintenir la combustion en l'état sans rajouter des buches, ou charger moins le poêle bouilleur 2.

Comme représenté sur les figures 1 et 2, le régulateur 11 présente un moyen de calcul relié à un émetteur/récepteur qui permet d'envoyer des instructions au récepteur/émetteur du moyen de commande du brûleur 6 et au récepteur/émetteur du moyen de commande 13 du poêle bouilleur 2.

De façon connue, le moyen de calcul est relié à des capteurs de mesure de paramètres pour déterminer le besoin en chauffage de l'installation de chauffage 1.

En particulier, le moyen de calcul permet de calculer le besoin en bois du poêle bouilleur en fonction de la température chaudière, de la température du poêle bouilleur et de la température de consigne.

Il est ensuite signalé le besoin en bois par un moyen de signalisation 15.

Avantageusement, le moyen de calcul est relié à un capteur de température effective 16 du circuit d'eau 8 en sortie de la chaudière et à un capteur 17 de la température de l'eau de sortie du poêle bouilleur 2, dite température poêle bouilleur.

Avantageusement, le moyen de calcul est relié à un capteur de température 20 de l'air ambiant et/ou à un capteur de température 21 de l'air extérieur.

Il peut également être relié à des capteurs de débits d'eau circulants dans les circuits d'eau 5 et 8 du poêle bouilleur 2 et de la chaudière 3.

Il peut également être relié à des capteurs de température d'entrée 22 des circuits d'eau 5 et 8 du poêle bouilleur 2 et de la chaudière 3.

Ainsi, la puissance du poêle bouilleur 2 et la puissance de la chaudière 3 qui sont proportionnelles au débit d'eau, à la différence entre la température de sortie d'eau et la température d'entrée d'eau de chaque circuit d'eau, et à la capacité calorifique de l'eau peuvent être calculées.

Une vanne trois voies 18 permet d'autoriser la circulation d'eau du circuit d'eau 5 du poêle 2.

Sur la figure 1, la vanne trois voies 18 permet la circulation d'eau du circuit d'eau 5 du poêle 2 afin de transmettre de la chaleur au niveau de l'échangeur 9 au circuit d'eau de la chaudière 3.

Avantageusement, mais de façon non limitative, la circulation d'eau du circuit d'eau 5 au niveau de l'échangeur 9 est autorisée par le moyen de commande 13 lorsque la température du poêle a atteint une valeur seuil.

Dans le cas contraire, la vanne trois voies 18 ne permet que le bouclage de l'eau dans le poêle à bois 2 par le circuit d'eau 19.

Sur la figure 2, la vanne trois voies 18 permet la circulation de l'eau du circuit 5 du poêle à bois dans la partie 8' du circuit d'eau de la chaudière 3 par l'ouverture du moyen de réglage 10' et la fermeture des moyens de réglage 10 et 10".

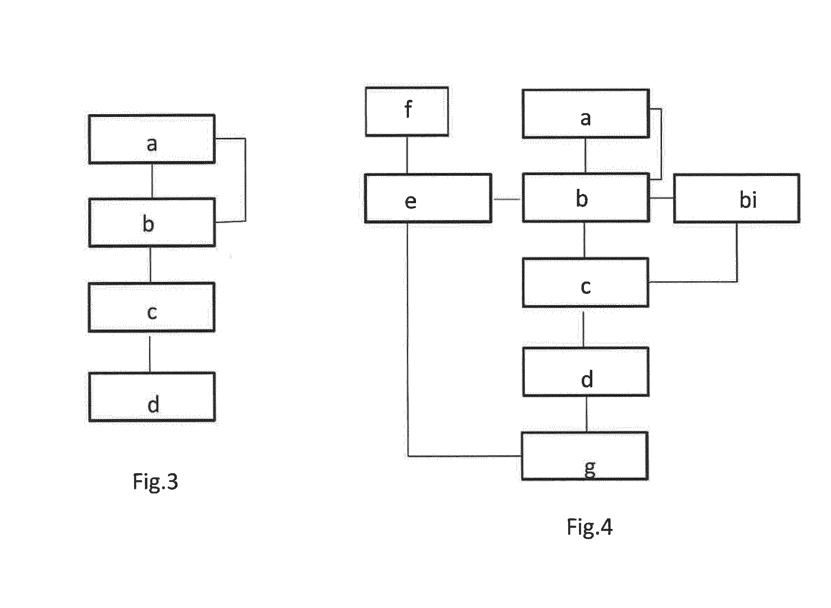

L'invention concerne également un procédé de chauffage d'eau illustré sur les figures 3 et 4, utilisant l'installation de chauffage 1 précédemment décrite.

Le procédé de chauffage comporte les étapes consistant à :
- dans une étape a, considérer une température de consigne du circuit d'eau 8 en sortie de la chaudière 3, dite température de consigne, et mesurer une température effective de l'eau du circuit d'eau en sortie de la chaudière 3, dite température chaudière 3,
- dans une étape b, détecter, par le moyen de commande 13, si le poêle bouilleur 2 est allumé,
- si le poêle bouilleur 2 est allumé, dans une étape c envoyer l'information de l'allumage du poêle bouilleur 2, par le moyen de commande 13, au régulateur 11,
- dans une étape d, éteindre ou diminuer, par le régulateur 11, la puissance du brûleur 6, en fonction de la valeur de l'écart entre la température de consigne et la température effective.

La température de consigne est calculée en tenant compte de différents paramètres, tels que la température de l'air ambiant et/ou la température de l'air extérieur ou donnée par l'utilisateur.

Elle peut également être calculée en tenant compte des valeurs de débits d'eau circulants dans les circuits d'eau 5 et 8 du poêle bouilleur 2 et de la chaudière 3, et de celles des températures d'entrée des circuits d'eau du poêle bouilleur 2 et de la chaudière 3.

Dans une réalisation, l'allumage du poêle bouilleur 2 est détecté lorsque la température des fumées est supérieure à une température de référence.

Dans une autre réalisation, l'allumage du poêle bouilleur 2 est détecté lorsque la température de l'eau de sortie du poêle bouilleur 2 est supérieure à une température de référence.

Dans le mode de réalisation préféré du procédé selon l'invention, mais de façon non limitative, de la figure 4, il est ajouté une étape initiale bi de détection de température minimale de l'eau du poêle bouilleur 2 pour démarrer le procédé.

Cette étape initiale consiste à :
- (bi) détecter si la température poêle bouilleur est supérieure ou égale à une température de seuil,
- (c) si la température poêle bouilleur est supérieure ou égale à la température de seuil, envoyer l'information de l'allumage du poêle bouilleur 2 par le moyen de commande 13 au régulateur 11,
- (d) éteindre ou diminuer, par le régulateur 11, la puissance du brûleur 6, en fonction de la valeur de l'écart entre la température de consigne et la température effective.

De façon avantageuse, la température de seuil est calculée et déterminée pour éviter la condensation de la vapeur d'eau des fumées dans le poêle bouilleur 2, ce qui évite l'endommagement du poêle par la condensation de la vapeur d'eau des fumées sur ses parois.

Par exemple, il peut être considéré comme température de seuil une température de 60°.

Dans le mode de réalisation préféré du procédé selon l'invention, mais de façon non limitative, dans la variante représentée sur la figure 4, dans une étape e, lorsque le poêle bouilleur 2 est allumé, la température de l'eau de sortie du poêle bouilleur 2 dite température poêle bouilleur, est mesuré.

Le besoin en bois du poêle bouilleur 2 est alors calculé en fonction de la température effective, de la température du poêle bouilleur 2 et de la température de consigne, dans l'étape e.

Le besoin en bois peut être calculé par le régulateur 11 et envoyé au moyen de commande 13.

Il est ensuite signalé à l'utilisateur par le moyen de signalisation 15 dans une étape f.

Lorsque le poêle bouilleur 2 a remplacé en partie ou complètement le chauffage réalisé par le fonctionnement du brûleur 6, le procédé réalise une étape g de vérification et de bouclage du procédé.

Cette étape g consiste à calculer à nouveau la température de consigne et mesurer la température effective, après une durée déterminée qui suit l'allumage du poêle à bois, et l'arrêt ou la diminution de la puissance du brûleur 6.

Par exemple, il peut être choisi une durée déterminée d'une heure.

Il est ensuite envoyer ces données pour calculer à nouveau le besoin en bois et mesurer la température poêle bouilleur et revenir à l'étape e, et signaler le besoin en bois par le moyen de signalisation 15 dans l'étape f.

L'invention permet ainsi de prélever toutes les calories dans le poêle bouilleur 2 et de les utiliser dans le circuit d'eau 8 de la chaudière 3 pour réaliser de l'eau de chauffage pour des radiateurs R ou de l'eau chaude sanitaire.

Elle permet ainsi d'utiliser le poêle à bois fonctionnant en pleine combustion sans limitation et sans avoir à surveiller si la combustion n'est pas trop importante, ce qui n'est pas le cas des systèmes actuels où il convient de diminuer et/ou augmenter le tirage, ou d'utiliser des moyens de réglage de la combustion du bois dans le poêle bouilleur afin d'éviter que la température poêle bouilleur dépasse une température haute, par exemple 80°, au-delà de laquelle le poêle bouilleur est dégradé.

Elle permet donc d'éviter l'encrassement du poêle bouilleur 2 en réalisant une bonne combustion du bois, et de donner à la chaudière 3 toutes les calories possibles afin d'empêcher la température de l'eau de monter à 80°.

En d'autres termes, il est utilisé toute l'énergie de combustion du bois pour chauffer l'eau.

Le rendement de l'installation de chauffage 1 est donc supérieur à toutes les autres installations de chauffage connues utilisant un poêle bouilleur.

Dans la réalisation de la figure 1, le prix de l'installation de chauffage 1 est modeste, car il ne nécessite que l'achat d'un échangeur 9.

## Revendications

1. Procédé de chauffage d'eau, utilisant un poêle bouilleur (2) à chargement manuel en bois, un régulateur (11) et une chaudière (3) à alimentation automatique en combustible, le poêle bouilleur (2) présentant un moyen de commande (13) et un circuit d'eau (5), la chaudière (3) présentant un brûleur (6) et un circuit d'eau (8), comprenant les étapes consistant à :
- (a) prendre en compte une température de consigne du circuit d'eau (8) en sortie de la chaudière (3), dite température de consigne, et mesurer une température effective de l'eau du circuit d'eau (8) en sortie de la chaudière (3), dite température chaudière,
- (b) détecter si le poêle bouilleur (2) est allumé,
- (c) si le poêle bouilleur (2) est allumé, envoyer l'information de l'allumage du poêle bouilleur (2) par le moyen de commande (13) au régulateur (11),
- (d) éteindre ou diminuer, par le régulateur (11), la puissance du brûleur (6), en fonction de la valeur de l'écart entre la température de consigne et la température effective,
**caractérisé en ce que** le procédé comprend les étapes consistant à, lorsque le poêle bouilleur (2) est allumé :
- (e) mesurer une température de l'eau de sortie du poêle bouilleur (2) dite température poêle bouilleur,
- (e) calculer le besoin en bois du poêle bouilleur (2) en fonction de la température chaudière, de la température du poêle bouilleur et de la température de consigne,
- (f) signaler le besoin en bois par un moyen de signalisation (15).

2. Procédé selon la revendication 1, comprenant l'étape consistant à :
- (bi) détecter si la température poêle bouilleur est supérieure ou égale à une température de seuil,
- (c) si la température poêle bouilleur est supérieure ou égale à la température de seuil, envoyer l'information de l'allumage du poêle bouilleur (2) par le moyen de commande (13) au régulateur (11),
- (d) éteindre ou diminuer, par le régulateur (11), la puissance du brûleur (6), en fonction de la valeur de l'écart entre la température de consigne et la température effective.

3. Procédé selon la revendication 2, dans lequel la température de seuil est calculée et déterminée pour éviter la condensation de l'eau dans le poêle bouilleur (2).

4. Procédé selon l'une des revendications 1 à 3, dans lequel la température de consigne est calculée en tenant compte de différents paramètres, tels que la température de l'air ambiant et/ou la température de l'air extérieur.

5. Procédé selon l'une des revendications 1 à 4, comprenant l'étape consistant à :
- (g) calculer à nouveau la température de consigne et mesurer la température chaudière, après une durée déterminée qui suit l'allumage du poêle à bois, et l'arrêt ou la diminution de la puissance du brûleur (6),
- (e) calculer à nouveau le besoin en bois et mesurer la température poêle bouilleur,
- (f) signaler le besoin en bois par le moyen de signalisation (15).

6. Procédé selon l'une des revendications 1 à 5, dans lequel l'allumage du poêle bouilleur (2) est détecté lorsque la température des fumées est supérieure à une température de référence.

7. Procédé selon l'une des revendications 2 à 6, dans lequel la température de seuil est 60°.

8. Procédé selon l'une des revendications 2 à 7, dans lequel la température de seuil est calculée et déterminée pour éviter la condensation de la vapeur d'eau des fumées dans le poêle bouilleur (2).

9. Installation de chauffage (1) d'eau, comprenant un poêle bouilleur (2) à chargement manuel en bois, et une chaudière (3) à alimentation automatique en combustible,
le poêle bouilleur (2) présentant une pompe (4) et un circuit d'eau (5),
la chaudière (3) présentant un brûleur (6), une pompe (7) et un circuit d'eau (8),
l'installation de chauffage (1) comportant :
- un dispositif permettant de transmettre une partie de la chaleur du circuit d'eau (5) du poêle bouilleur (2) au circuit d'eau (8) de la chaudière (3),
- un régulateur (11),
- un moyen de détection de l'allumage du poêle bouilleur (2),
- un moyen de commande (13) du poêle bouilleur (2) relié au régulateur (11) et au moyen de détection,
- le moyen de commande (13) étant apte à communiquer avec le régulateur (11) pour réaliser la régulation de la puissance du brûleur (6) de la chaudière (3),
**caractérisée en ce que** le régulateur (11) comprend un moyen de calcul relié à des capteurs de mesure de paramètres pour déterminer le besoin en chauffage de l'installation de chauffage (1).

10. Installation de chauffage (1) de l'eau selon la revendication 9, **caractérisée en ce que** le moyen de commande (13) comporte un moyen de signalisation (15) relié au régulateur (11).

11. Installation de chauffage (1) de l'eau selon l'une des revendications 9 à 10, **caractérisée en ce que** le régulateur (11) est relié à un capteur de température de l'air ambiant et/ou un capteur de température de l'air extérieur.

12. Installation de chauffage (1) de l'eau selon l'une des revendications 9 à 11, **caractérisée en ce qu'**elle comprend un échangeur (9) entre le circuit d'eau (5) du poêle bouilleur (2) et le circuit d'eau (8) de la chaudière (3), et **en ce que** les circuits d'eau (5, 8) sont distincts.

13. Installation de chauffage (1) de l'eau selon l'une des revendications 9 à 11, **caractérisée en ce que** le circuit d'eau (5) du poêle bouilleur (2) et le circuit d'eau (8) de la chaudière (3) sont branchés en parallèle.

14. Installation de chauffage (1) de l'eau selon l'une des revendications 9 à 13, **caractérisée en ce que** le moyen de commande (13) et le régulateur (11) présentent des émetteurs et des récepteurs qui communiquent entre eux.

15. Installation de chauffage d'eau selon l'une des revendications 9 à 14, **caractérisée en ce que** le moyen de détection de l'allumage du poêle bouilleur (2) est un capteur de la température des fumées du poêle bouilleur (2).

16. Installation de chauffage d'eau selon l'une des revendications 9 à 15, **caractérisée en ce que** la chaudière (3) comporte plusieurs circuits d'eau, chaque circuit d'eau étant adapté à chauffer une zone de chauffage.
